Europäisches Patentamt

(19) European Patent Office

Office européen des brevets

(11) Veröffentlichungsnummer: **0 252 270**
B1

(12) # EUROPÄISCHE PATENTSCHRIFT

(45) Veröffentlichungstag der Patentschrift:
08.11.89

(21) Anmeldenummer: 87107722.8

(22) Anmeldetag: 27.05.87

(51) Int. Cl.⁴: **A23L 1/18**, A23L 1/195,
B30B 9/16, B30B 12/00,
B30B 13/00

(54) **Verfahren und Vorrichtung zur einstufigen Herstellung eines Halbfertigprodukts, insbesondere eines Nahrungsmittelprodukts aus stärkehaltigem Rohmaterial.**

(30) Priorität: 10.06.86 US 872526

(43) Veröffentlichungstag der Anmeldung:
13.01.88 Patentblatt 88/2

(45) Bekanntmachung des Hinweises auf die Patenterteilung:
08.11.89 Patentblatt 89/45

(84) Benannte Vertragsstaaten:
AT BE CH DE ES FR GB IT LI NL SE

(56) Entgegenhaltungen:
EP-A- 0 084 831
WO-A-86/06938
DE-A- 1 567 354
DE-B- 1 193 785

(73) Patentinhaber: Werner & Pfleiderer GmbH,
Theodorstrasse 10 Postfach 30 12 20,
D-7000 Stuttgart 30(DE)

(72) Erfinder: Dreiblatt, Adam, 2111 Van Courtland Circle,
Yorktown Heights New York 10 598(US)
Erfinder: Schuler, Edmund W., 43 Shady Side Road,
Ramsey New Jersey 07446(US)
Erfinder: Van Lengerich, Bernhard, 54 Grey Avenue,
Allendale New Jersey 07401(US)

(74) Vertreter: Schneck, Herbert, Dipl.-Phys., Dr. et al, Rau &
Schneck Patentanwälte Königstrasse 2,
D-8500 Nürnberg 1(DE)

**Beschreibung**

Die Erfindung richtet sich auf ein Verfahren und eine Vorrichtung zur einstufigen Herstellung eines für eine Endbearbeitung geeigneten Produkts, insbesondere eines Nahrungsmittelprodukts aus stärkehaltigem Material.

Das gemäß dem Verfahren hergestellte Produkt ist ein Halbfertigprodukt. Halbfertigprodukte werden grundsätzlich in drei Bereichen hergestellt, nämlich bei Snacks, Frühstückszerealien und Instant-Produkten.

Allgemein läßt sich sagen, daß alle Halbfertigprodukte nichtexpandierte, glasige Produkte hoher Dichte sind, welche einen Wassergehalt zwischen 1o und 2o% aufweisen. Die Stärke des Rohmaterials ist nahezu vollständig gelatiniert und der Proteingehalt ist denaturiert.

Die Gründe für die Herstellung und Verwendung von Halbfertigprodukten in den drei genannten Bereichen sind unterschiedlich. Bei Snacks z.B. sind Halbfertigprodukte leichter formbar als direkt expandierte Produkte. Dementsprechend können sehr komplizierte und besondere Formen leichter aus Halbfertigprodukten hergestellt werden, weil der Formgebungsschritt sich leichter steuern läßt und die Expansion nicht so schnell stattfindet wie bei einem direkt expandierten Produkt.

Es besteht ein wesentlicher Vertriebsvorteil für Snackprodukte die nicht expandiert sind aufgrund der Unterschiede in der Dichte. Die Hersteller können Halbfertigprodukte zentral herstellen und sie zu dezentralisierten Bearbeitungsstätten transportieren, wo das Produkt durch Mikrowellen, Heißluft oder heißes Öl und dgl. expandiert werden kann. Die Frische und die mikrobiologische Stabilität des Endprodukts ist erheblich größer als das von leicht expandierten Snacks.

Im Bereich der Frühstückszerealien werden viele Halbfertigprodukte unter Zuhilfenahme herkömmlicher Verfahren hergestellt, z.B. durch Vorkonditionierung der Feststoffe und Flüssigkeiten in einem Vorkonditionierer, wo das Produkt teilweise befeuchtet und/oder teilweise gelatiniert wird. Nach dem Vorkonditionierungsschritt wird das Produkt in einen Kochextruder gebracht, wo die verbleibende Gelatinierung der Stärke und Denaturierung des Proteins durchgeführt werden. Dieser Prozeß erfordert 30 bis 35% Wassergehalt, welches teilweise verdampft wird, wenn das Produkt aus dem ersten Extruder kommt. Das leicht expandierte Produkt verliert dann Wärme und seine hohe Temperatur und wird dann in einen Formextruder gebracht, wo das Produkt komprimiert und geformt wird.

Das geformte und geschnittene Produkt wird dann in ein Trockensystem eingebracht und anschließend in "Verpuffungskanonen", in welchen aufgrund hohen Druckabfalls ein Teil des verbleibenden Wassers in dem Produkt expandiert, so daß das Endprodukt mit der charakteristischen Form und inneren Textur entsteht.

Herkömmliche Verfahren zur Herstellung von Snackprodukten, wie z.B. Kornchips, umfassen ein mehrstufiges Verfahren, in welchem die Verweilzeit der Ausgangsmasse von dem ersten Kontakt mit Wasser bis zum Backvorgang zwischen 6 und 25 Stunden liegt.

Es werden auch Extrusionstechniken zur Herstellung von Halbfertigprodukten verwendet, bei welchen ein pulverförmiges Vorgemisch in einen Mixer transportiert wird, um eine Mischung mit Wasser oder wässrigen Lösungen vorzunehmen. Aus dem Mixer gelangt hydratisiertes Gemisch in einen ersten Kochextruder, in welchem das Produkt gekocht und die Stärke gelatiniert wird. Das Produkt tritt aus dem Extruder aus und in eine Vakuumkammer ein, wo ein Teil des Wassers in Form von Dampf entfernt werden kann, wobei die Temperatur abfällt. Das Produkt tritt dann in einen zweiten Extruder ein, welcher zu Form- und Kühlzwecken dient. Nach dem zweiten Extruder gelangt das Produkt in einen Vortrockner/Rüttler und erreicht schließlich das abschließende Trocknungssystem. Dementsprechend erfordert die beschriebene Extrusionstechnik nicht weniger als fünf einzelne Ausrüstungsteile und dazwischen Hilfseinrichtungen.

Ein weiteres System verwendet einen gleichsinnig rotierenden, selbstnetzenden Doppelschneckenextruder als Misch- und Kocheinrichtung, wobei das Material hydratisiert, gemischt, gekocht und expandiert wird. Die Wasserverdampfung findet während des Transports des expandierten Produkts von einem Extruder zu einem zweiten Extruder statt, welcher ein Einschrauben- oder Doppelschraubenextruder sein kann. Der zweite Extruder formt das Produkt, welches dann in das Trocknungssystem gelangt.

Nach dem erfindungsgemäßen Verfahren und der erfindungsgemäßen Vorrichtung wird ein stärkehaltiges Rohmaterial, wie Zerealien-, Kartoffel- oder Tapiokamehl in die Zuführzone eines Extruders eingebracht und mit eingespritztem Wasser gemischt. Die resultierende Masse wird dann in einer Kochzone bei einer Temperatur von etwa 1oo bis 15o°C unter Ausbildung einer plastifizierten Masse gekocht. Unmittelbar anschließend an den Kochvorgang bewegt sich die plastifizierte Masse in eine Entlüftungszone. Ein Teil der Feuchtigkeit wird von der Masse als Dampf in der Entlüftungszone abgezogen. Diese Zone kann als Vakuumzone, bei Atmosphärendruck oder unter erhöhtem Druck betrieben werden. Der Verlust an Wasserverdampfungsenthalpie resultiert in einem wesentlichen Temperaturabfall der Masse. Eine Belüftungspresse verhindert den Übertrag von Produkt in das Vakuumsystem. Die vorgekochte Masse wird in dem letzten Extruderabschnitt auf ca. 7o bis 8o°C gekühlt. Die gekühlte Masse wird dann in den Formgebungsabschnitt transportiert und geformt, durch eine Formgebungsdüse oder eine Plattendüse gepreßt und eventuell in einzelne Teile mit einer weiten Breite von Formen und Konfigurationen geschnitten.

Das erfindungsgemäße Verfahren und die entsprechende Vorrichtung ermöglichen so die Funktionen eines Mischers, eines ersten Extruders, einer Vakuumkammer, eines zweiten Extruders und eines Vortrockners in einer einzigen Stufe.

Während in vorbekannten Verfahren die Prozeßzeiten von 6 bis 25 Stunden betrugen ausgehend von dem ersten Beimischen von Wasser zu dem Rohmaterial, reduziert das erfindungsgemäße Verfahren und die entsprechende Vorrichtung die Prozeßzeit, so daß eine Verweildauer in der Größenordnung von 10 Minuten oder weniger erreicht wird.

Für die Herstellung von Frühstückszerealien kombiniert das neue Verfahren den Vorkonditionierungsschritt, den ersten Extrusionsschritt, den Wasserverdampfungsschritt und den Formextrusionsvorgang in einem einstufigen Verfahren. Dementsprechend kann das durch das neue Verfahren hergestellte Produkt direkt aus dem Extruder in eine "Verpuffungskanone" gebracht werden. Es ist auch möglich, teigartige Produkte herzustellen, welche weniger Kochzeit benötigen. Diese sogenannten Instantprodukte sind vorgekochter Reis, Teigwaren und andere Produkte auf Zerealienbasis.

Ein weiteres Merkmal der Erfindung besteht darin, daß es möglich ist, die Qualität des hergestellten Produkts bei Minimierung der Verfahrensdauer zu kontrol lieren. Auf diese Weise ist eine Flexibilität im feuchtigkeitsgehalt und in den Feuchtkochverhältnissen verfügbar. Eine derartige Flexibilität ist insbesondere in einer Industrie von Bedeutung, wo die Produktidentität ein vordringliches und ständiges Anliegen ist.

Die verschiedenen neuen Merkmale, welche die Erfindung charakterisieren, werden im einzelnen in den folgenden Ansprüchen wiedergegeben.

Weitere Merkmale, Vorteile und Einzelheiten der Erfindung ergeben sich aus der folgenden Beschreibung bevorzugter Ausführungsformen anhand der Zeichnung. Dabei zeigen

Fig. 1 eine schematische Darstellung einer erfindungsgemäßen Vorrichtung unter Veranschaulichung der einzelnen Verfahrensschritte in der Vorrichtung, und

Fig. 2 einen Schnitt einer erfindungsgemäßen Vorrichtung längs der Linie II-II in Fig. 1.

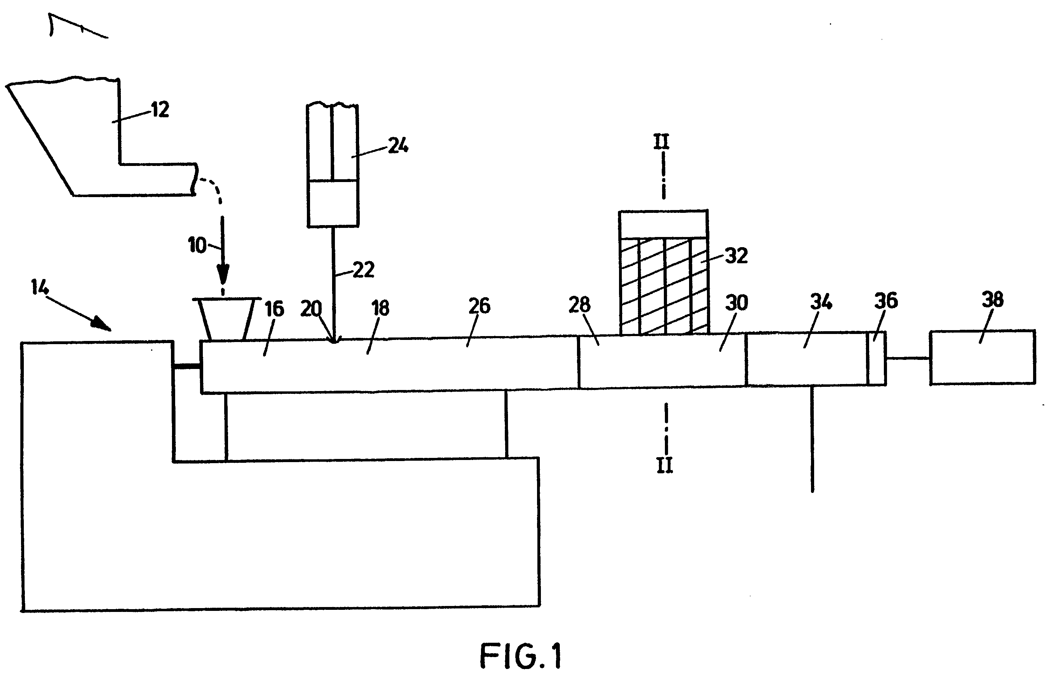

In Fig. 1 ist veranschaulicht, daß ein im wesentlichen trockenes Rohmehl 1o, wie z.B. aus Weizen, Korn oder anderen Zerealien ebenso wie ein Wurzelmehl aus Kartoffeln oder Tapioka oder eine Mischung von zwei oder mehreren dieser Materialien gravimetrisch oder volumetrisch aus einer Zuführeinrichtung 12 in eine erste Kammer 16 eines Mehrkammerextruders 14 geführt wird. Jede beliebige herkömmliche Zuführeinrichtung kann verwendet werden. Dabei muß lediglich berücksichtigt werden, daß für Lebensmittel und ähnliche Produkte hygienische Bedingungen eingehalten werden müssen.

Vorzugsweise wird eine gravimetrisch arbeitende Zuführeinrichtung verwendet.

Die erste Kammer 16 wird im allgemeinen auf Raumtemperatur und bei Atmosphärendruck gehalten. Die ineinandergreifenden, gleichsinnig rotierenden Schrauben in diesem Extruderabschnitt führen das Rohmaterial in axialer Richtung in eine zweite Kammer 18. Der Abschnitt der Schrauben in der ersten Kammer 16 ist mit Hochleistungselementen für einen schnellen Transport des Rohmaterials ausgestattet. Die zweite Kammer 18 weist eine Öffnung 2o auf, so daß Flüssigkeit 22 in die zweite Kammer 18 mit einem Druck von 1 bis 6o Bar eingespritzt werden kann. In der Regel wird eine Mehrzahl von Flüssigkeitseinspritzpunkten in diesem Bereich benutzt. Im allgemeinen muß der Flüssigkeitsdruck höher sein als der in der Kammer aufgebaute Druck. Die Flüssigkeit 22 kann mittels einer typischen Pumpeinrichtung 24, wie z.B. einer Dreikolbenpumpe, oder anderen Flüssigpumpeinrichtungen eingespritzt werden.

Die Flüssigkeit 22 kann Wasser oder eine heiße oder kalte wässrige Lösung sein, welche Feststoffe bis zum Sättigungspunkt der Flüssigkeit oder darüber hinaus enthält. Die Lösung oder Dispersion kann NaCl, Glukose, Saccharose, Laktose, Maltose, andere Mono- und/oder Disaccharide oder Mischungen hiervon umfassen. Die Flüssigkeit 22 kann weitere Substanzen allein oder zusätzlich zu den vorgehenden enthalten. Emulgatoren, wie Mono- oder Diglyzerate können hinzugefügt werden, um die physikalischen Eigenschaften der Masse, wie die Textur und die Expansionsintensität ebenso wie das Hydrationsverhalten zu steuern.

Der Wassergehalt der Mischung nach dem Einführen des Rohmaterials 1o und der Flüssigkeit 22 in die zweite Kammer 18 beträgt typischerweise ungefähr 20 Gew.%, kann aber von 18 bis 40% in Abhängigkeit von dem Rohmaterial und den gewünschten Endprodukteigenschaften variieren. Die Variationen im Wassergehalt sind erfindungsgemäß möglich und gestatten eine variable Steuerung und Anpassung, um bestimmte Eigenschaften des Endprodukts und gleichbleibende Produktqualität zu erzielen.

Das Rohmaterial und die wässrige Lösung und/oder das Wasser werden in der Kammer 18 intensiv gemischt. Das Mischen und der Transport der Masse dort wird bewerkstelligt durch die Verwendung einer Kombination kurzer Rückförderelemente und/oder Knetblöcke (links und/oder rechts). Während das Material innerhalb des Schraubenabschnitts nach vorwärts gedrückt wird, nehmen Temperatur und Druck in der Kammer 18 zu. Gleichzeitig wird mechanische Energie in die Masse eingeführt. Auf diese Weise bildet das verflüssigte und durchgearbeitete Rohmaterial eine plastifizierte Masse. Dies passiert innerhalb der Kochzone 26.

In der Kochzone 26 wird die Temperatur weiter erhöht. Die Temperatur in dieser Zone liegt im allgemeinen bei 14o bis 150°C, in jedem Fall höher als 1oo°C. Eine Zone 26 kann verschiedene weitere Kammern umfassen. Die Kochzone weist Rückförderelemente und/oder Knetblöcke auf, welche die Masse transportieren aber diese auch "zurückmischen". Andere Durchflußbeschränkungseinrichtungen einschließlich Ventileinrichtungen können verwendet werden, um den Materialfluß in diesem Kammerbereich zu beschränken. Die Kochzone 26 arbeitet im allgemeinen bei einem Druck von 1 bis 6o Bar. Eine typische Verweilzeit vom Zuführende bis zum Ende der Kochzone 26 liegt in der Größenordnung von 1/2 bis 1 1/2 Minuten.

Nachdem Druck und Temperatur in der Kochzone 26 einen Maximalwert erreicht haben, tritt die plastifizierte Masse unmittelbar in die Feuchtigkeitskontrollzone 28 ein. In der Feuchtigkeitskontrollzone 28 wird die Feuchtigkeit der überhitzten Masse unter kontrollierten Verhältnissen reduziert. Durch Einstellung der Bedingungen in Zone 28 kann die dort entfernte Wassermenge über einen weiteren Bereich gesteuert werden. Dementsprechend ermöglichen das Verfahren und die Vorrichtung gemäß der Erfindung die Auswahl eines Wassergehalts für den Kochprozeß zur Einstellung bestimmter Produkteigenschaften. Weiterhin wird die Einstellung der Feuchtigkeit des Halbprodukts möglich, was sehr wichtig für die Endbearbeitung, d.h. die Flockenbildung, das Rösten, die Trocknung usw. ist, jeweils in Abhängigkeit von der Art des Produkts und den dementsprechend einzustellenden Eigenschaften.

Die Zone 28 ist als offener Kammerabschnitt 3o ausgebildet, welcher eine Förderlänge für die plastifizierte Masse aufweist, welche zwischen 3 und 12 mal länger ist als der Schraubendurchmesser. Die offene Kammer 3o ist mit einer Belüftungspresse 32 abgedeckt, welche dazu dient, einen Produktaustritt zu verhindern. Eine bevorzugte Belüftungspresse ist als Zweischraubenpresse ausgebildet, welche nach oben gelangendes Material von den Schrauben des Extruders nach unten führt, wohingegen Dampf entlüftet werden kann. Bei einer anderen Ausführungsform der erfindungsgemäßen Vorrichtung ist die offene Kammer 3o mit einem Vakuumdom abgedeckt, welcher mit einer Vakuumpumpe verbunden ist. Der Schraubenabschnitt in der Zone 28 weist Elemente mit großer Ganghöhe zur Erzeugung einer Teilfüllung auf.

Die Feuchtigkeitskontrollzone 28 kann bei Atmosphärendruck oder unter anderen Druckbedingungen - wie unten beschrieben - oder über Atmosphärendruck betrieben werden. Beim Betrieb unter Vakuumbedingungen kann der absolute Druck in der Kontrollzone 28 bei 1oo Millibar liegen. Wenn Atmosphärendruck oder Betrieb unter Überdruck bevorzugt wird, variiert der absolute Druck dort zwischen etwa 1 Bar (Atmosphärendruck) bis zu 5 Bar.

Die Doppelschraubenbelüftungspresse ist so ausgebildet, daß sie auf der Kammer sitzt und die Kammeröffnung in der Feuchtigkeitsgehaltssteuerzone 28 abdeckt. Die Belüftungspresse ist so ausgebildet, daß eine Doppelschraube der Presse eine Förderrichtung aufweist, welche im wesentlichen senkrecht zu der Schraube in der Kammer in Zone 28 ist. Die Doppelschraube ist in einem Gehäuse angeordnet, welches in leitender Verbindung mit einer Vakuumeinrichtung steht, wenn die Feuchtigkeitskontrollzone 28 unter Atmosphärendruck betrieben wird. Wenn Vakuum angelegt wird, verdampft Feuchtigkeit in der Kontrollzone 28. Durch Einstellung des Vakuums kann die Menge verdampfter Feuchtigkeit gesteuert werden.

Die Feuchtigkeit, nun in Dampfform, geht in den Vakuumbereich. Es ist gefunden worden, daß ein Teil der Masse durch das austretende Gas mitgeführt und ausgetragen werden kann. Auf diese Weise würde es zu Verstopfungen des Vakuum- und Belüftungssystems kommen. Die Doppelschraubenpresse dient dementsprechend dazu, gasförmige Komponenten aus der Steuerkammer 28 austreten zu lassen. Jegliches mitgeführte Material wird durch die rotierenden Doppelschrauben erfaßt und in die Steuerkammer 28 zurückgeführt. Diese Rückführung gestattet es nicht nur, daß das System kontinuierlich ohne unnötige Wartungszeiten arbeitet, sondern reduziert auch Produktverluste und stellt eine gleichbleibende Produktverteilung sicher, da das mitgenommene Material vorwiegend aus leichteren und kleineren Teilen bestehen würde.

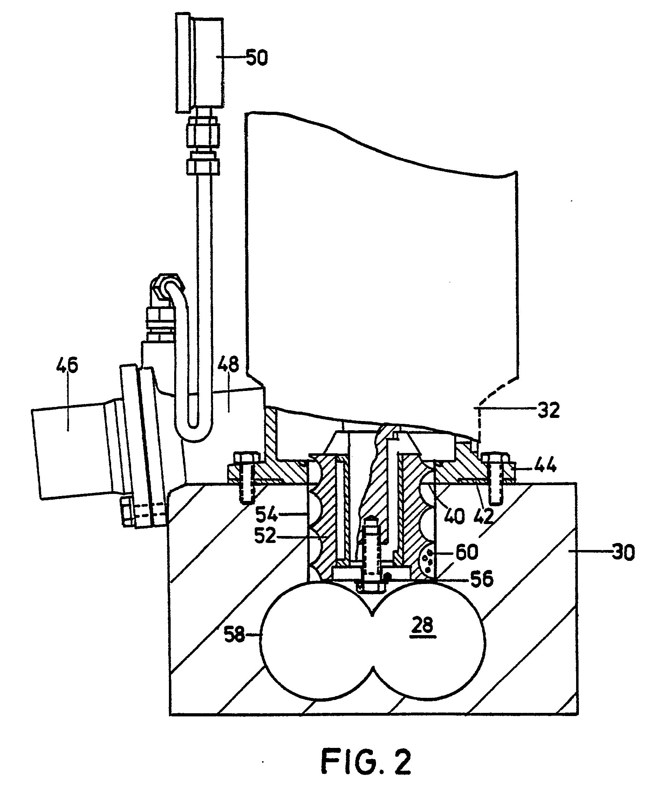

Fig. 2 zeigt einen aufgebrochenen Querschnitt der Doppelschraubenpresse 32 und der Kontrollzone 28. Die Förderschrauben innerhalb der Kontrollzone 28 sind der Einfachheit halber nicht dargestellt.

Der Kammerabschnitt 3o weist eine Öffnung 4o auf. Eine Doppelschraubenpresse 32 ist an der Kammer 3o befestigt. Eine Dichtung 42 und ein Flansch 44 ermöglichen eine gasdichte Verbindung.

Die Presse 32 steht in leitender Verbindung mit einem Vakuumsystem 46 mittels eines Leitungsabschnitts 48. Das Vakuumsystem 46 ist so ausgebildet, daß es die Einstellung eines bestimmten verminderten Drucks gestattet und ist mit einer Meßanordnung 5o versehen.

Wie in Fig. 2 dargestellt, weist die Presse 32 eine Doppelschneckenanordnung 52 auf (lediglich eine Schnecke ist dargestellt), welche in einem Gehäuse 54 angeordnet ist. Das Gehäuse 54 ist an seinem unteren Ende 56 befestigt und fluchtet mit einer Bohrung 58 in der Kammer 3o. In dem Bohrungsabschnitt 58 befinden sich die plastifizierte und teilweise abgekühlte Masse und die Extruderschraube, was jedoch nicht dargestellt ist.

Die Doppelschraubenanordnung 52 ist in dem Gehäuse 54 so gelagert, daß verdampfte Feuchtigkeit aus der Zone 28 durch das Gehäuse 54 entweichen kann und aus dem System abgezogen wird. Die rotierende Schraubenanordnung fängt mitgeführte Masseteilchen 6o auf und führt sie zurück in die Zone 28.

Die Belüftungspresse 32 ist auch wirksam, wenn die Feuchtigkeitskontrollzone 28 nicht mit einem verminderten Druck beaufschlagt wird, sondern wenn sie mit Druckbedingungen arbeitet.

Allgemein läßt sich sagen, daß wenn größere Feuchtigkeitsmengen entfernt werden müssen, der Betrieb mit Unterdruck in der Feuchtigkeitskontrollzone 28 bevorzugt wird. Wenn dagegen geringere Mengen ausgetrieben werden müssen, genügt ein Betrieb unter Druck. Der Druck wird in der Kochzone aufgebaut und kann dementsprechend durch den Feuchtigkeitsgehalt eingestellt werden.

Die Möglichkeit zur Feuchtigkeitskontrolle ermöglicht es, die Koch- und Formvorgänge unter optimalen Bedingungen durchzuführen, um auf diese Weise eine gleichbleibende und produkttypische Charakteristik zu ermöglichen. Z.B. kann das Kochen eines bestimmten Produkts einen höheren Feuchtigkeitsgehalt erfordern, als dies für den Formvorgang wünschenswert ist. In einem solchen Fall ermöglicht es die erfindungsgemäße Feuchtigkeitskontrolle mit der erforderlichen Flexibilität zu reagieren, um die Bedingungen für das spezifische Produkt ohne Verminderung der Produktqualität zu optimieren.

Die Arbeitsweise der Kontrollzone 28 ist gemäß der vorliegenden Erfindung besonders insoweit wichtig, daß wenn ein Produkt in der Kochzone 26 gekocht wird, die Stärke in dem Produkt einen minimalen Wassergehalt von etwa 33% braucht. Typischerweise ist etwa 6o% der Trockensubstanz Stärke. Dementsprechend ist ein minimaler Gesamtwassergehalt von ca. 2o% erforderlich. Bei niedrigeren Wassergehalten weist die Masse höhere Viskositäten in der Kochzone auf. Die spezifische mechanische Energieeinführung (SME) ist also höher und dementsprechend das Aufbrechen der Stärkemoleküle, insbesondere der Amylopectinmoleküle.

Das molekulare Aufbrechen der Stärke führt zu größeren Änderungen der funktionellen Eigenschaften des Endprodukts. Wenn die Stärkemoleküle in kleinere Teile aufgebrochen werden, erhöht sich die Löslichkeit des Produkts zusammen mit der Klebrigkeit.

Dies bedeutet z.B. im Bereich von Snack-Nahrungsmitteln, daß die Produkte, welche unter Verwendung niedrigeren Wassergehalts hergestellt werden, eine schwache Textur aufweisen und sich im Mund klebrig anfühlen.

Bei Frühstückszerealien führt eine höhere Löslichkeit zu einer geringeren Unversehrtheit, wenn sich das Produkt in einer wässrigen Lösung oder Milch befindet. Typischerweise weisen extrudierte Produkte, welche unter höherer mechanischer Energieeinleitung hergestellt wurden, eine unzulängliche Beständigkeit auf und lösen sich in Milch oder in wässrigen Systemen. Bei Instant-Produkten führt die höhere Löslichkeit dazu, daß sich das gesamte Produkt in nicht wünschenswerter Weise während der Hydrationszeit löst. Dementsprechend muß dann, wenn ein Produkt Identifizierungscharakteristika hinsichtlich seiner Textur, Knusprigkeit, Beständigkeit oder Kauffähigkeit aufweist, Sorgfalt darauf verwandt werden, daß diese Charakteristika erhalten werden.

Um die vorstehend beschriebenen Nachteile zu vermeiden, ist ein höherer Wassergehalt in der Kochzone erforderlich, um ein stärkeres Aufbrechen der Stärke zu verhindern oder zu verzögern. Die Feuchtigkeitskontrollzone 28, wo überschüssiges Wasser aus dem Kochprozeß entfernt wird, und welche so ausgelegt ist, daß ein Produktaustrag verhindert wird, vermeidet die vorstehend beschriebenen Nachteile, indem der Feuchtigkeitsgehalt je nach Wunsch eingestellt werden kann.

Beim Betrieb der Kontrollzone 28 ist es erforderlich, eine Druckdifferenz aufrechtzuerhalten. Wenn z.B. die Kontrollzone 28 unter Vakuumbedingungen betrieben werden soll, d.h. bei einem absoluten Druck von 1oo bis 1ooo Millibar, typischerweise 7oo bis 8oo Millibar, wird das Teilvakuum bzw. die Saugbedingung in Zone 28 durch eine Pumpenanordnung erreicht. Selbst wenn jedoch die Kochzone sich auf einem Druck von 1 bis 5 Bar befindet, bildet die plastifizierte Masse eine wirksame Produktabdichtung, welche die entsprechenden Druckbedingungen in den verschiedenen Zonen aufrechterhält.

Wenn Feuchtigkeit durch Verdampfung in der Kontrollzone 28 entfernt wird, tritt ein gleichzeitiger Enthalpieverlust des Produkts auf, wodurch die Temperatur der Masse reduziert wird. Dieser Wärme- und Temperaturverlust stellt einen wesentlichen Vorteil dar, da die darauffolgende Kühlzone 34 relativ kurz sein kann. Dementsprechend ist eine unnötige Verschwendung mechanischer Energie bei hohen Viskositäten auf ein Minimum beschränkt und das mechanische Aufbrechen der Stärke nach dem Kochen wird reduziert oder ausgeschaltet, wodurch zusätzlich entsprechende Produktcharakteristika gewährleistet werden.

Das gekochte Produkt wird dann durch eine Düse 36 gepreßt, wo das Produkt geformt werden kann. Die Düse trägt auch dazu bei, geeignete Druckbedingungen in der Kontrollzone 28 aufrechtzuerhalten. Das geformte Produkt kann im Bedarfsfall dann in einen Zerkleinerer 38 oder in eine Walz- und Schneideinrichtung gebracht werden.

Ausführungsbeispiel

Rohmaterial wird mit einer Rate von 68 kg pro Stunde in körniger Form durch eine gravimetrische Zuführeinrichtung in die erste Kammer eines gleichsinnigen, selbstnetzenden Doppelschneckenextruders (Werner & Pfleiderer ZSK-57, L/D von 3o) eingeführt. Der Extruder weist zehn Kammern auf. Das zugeführte Material hat eine natürliche Ausgangsfeuchtigkeit von etwa 1o%. Wasser mit einer Rate von 21,2 kg/h in die Kammer 2 zugegeben. Die Schraubendrehzahl beträgt 2oo U/min. Das Rohmaterial und das Wasser werden vermischt unter Ausbildung einer plastifizierten Masse, welche in die Kochzone, dann in die Feuchtigkeitskontrollzone und schließlich in die Kühl und die Düsenzone eingeführt wird.

Die Temperatur während des Prozesses ändert sich je nach der jeweiligen Zone wie folgt:

5

| Kammer | 1 | 2 | 3 | 4 | 5 | 6 | 7 | 8 | 9 | 10 |
|---|---|---|---|---|---|---|---|---|---|---|
| T (°C) | 20 | 80 | 120 | 120 | 140 | 140 | 140 | 90 | 50 | 50 |

Die Düsenplatte, welche der Kammer 1o folgt, weist 18 Löcher auf, von welchen jedes 4,8 mm Durchmesser besitzt.

Kammer 8 bildet die Feuchtigkeitskontrollzone 28. Der Druck in Kammer 7 der Kochzone, welche sich auf einer Temperatur von 141°C befindet, beträgt etwa 2o Bar. Der Druck an der Düsenplatte beträgt etwa 9 Bar. Der Formgebungsvorgang an der Düsenplatte wird bei 79°C ausgeführt. Die Feuchtigkeitskontrollzone 28 (Kammer 8) wird bei einem verminderten Druck zwischen 2oo und 3oo Millibar mit einer Doppelschneckenpresse betrieben. Das gebildete Halbfertigprodukt weist einen Feuchtigkeitsgehalt von 17% auf. Die Prozeßverweildauer beträgt etwa 2 Minuten.

**Patentansprüche**

1. Einstufiges Verfahren zur Herstellung eines nichtexpandierten, vorgekochten und geformten Produkts mit einem für eine Endverarbeitung geeigneten Feuchtigkeitsgehalt aus einem stärkehaltigen Rohmaterial, dadurch gekennzeichnet, daß das Rohmaterial, wie Zerealien-, Kartoffel- oder Tapiokamehl, in eine Mischzone im Zuführbereich des Extruders eingebracht wird, Wasser in die Mischzone eingeführt wird,
das Rohmaterial und das Wasser in der Mischzone unter Ausbildung einer Masse gemischt werden,
die Masse in einer Vorkochzone anschließend zur Herstellung einer vorgekochten plastifizierten Masse bei 100 bis 150°C gekocht wird, unmittelbar anschließend die plastifizierte Masse in eine Entlüftungszone gebracht wird, wo ein Teil der Feuchtigkeit zur Herstellung einer vorgekochten Masse mit einem gewünschten Feuchtigkeitsgehalt als Dampf abgezogen wird,
die vorgekochte Masse dann in einem letzten Extruderabschnitt auf vorzugsweise 70 bis 80°C gekühlt wird, und die gekühlte Masse dann in einen Formungsabschnitt transportiert und geformt wird.

2. Verfahren nach Anspruch 1, dadurch gekennzeichnet, daß die Feuchtigkeitskontrollzone sich auf einem Druck unterhalb des Atmosphärendrucks befindet.

3. Verfahren nach Anspruch 1, gekennzeichnet durch definierte Einstellbedingungen in der Feuchtigkeitskontrollzone zur Einstellung des Feuchtigkeitsgehalts der vorgekühlten Masse durch Drucksteuerung.

4. Verfahren nach Anspruch 1, dadurch gekennzeichnet, daß die Flüssigkeit Wasser, eine wässrige Lösung enthaltend eine Substanz aus der Gruppe von Natriumchlorid, Glykose, Saccharose, Laktose, Maltose, Mono- und/oder Disaccharid oder Mischungen davon ist.

5. Verfahren nach Anspruch 4, dadurch gekennzeichnet, daß die Flüssigkeit Emulgierer und/oder Mono- oder Diglyzeride enthält.

6. Verfahren nach Anspruch 1, dadurch gekennzeichnet, daß die Feuchtigkeitskontrollzone bei Atmosphärendruck betrieben wird.

7. Verfahren nach Anspruch 1, dadurch gekennzeichnet, daß die Feuchtigkeitskontrollzone über Atmosphärendruck betrieben wird.

8. Vorrichtung zur einstufigen Herstellung eines unexpandierten, vorgekochten und geformten Produkts mit einem für eine Endbearbeitung geeigneten Feuchtigkeitsgehalt aus einem stärkehaltigen Rohmaterial nach Anspruch 1,
gekennzeichnet durch
eine Mischzone zur Aufnahme des Rohmaterials und einer Flüssigkeit, in welcher eine plastifizierte Masse gebildet wird,
Einrichtungen zum Transport der plastifizierten Masse aus der Mischzone in eine Vorkoch-Zone, wo die Masse vorgekocht wird,
Einrichtungen zum Transportieren der vorgekochten Masse in eine Feuchtigkeitskontrollzone,
Einrichtungen zur Einstellung des Feuchtigkeitsgehaltes der vorgekochten Masse in der Feuchtigkeitskontrollzone, und
Einrichtungen zum Verhindern des Ausblasens von Masseteilchen aus der Feuchtigkeitskontrollzone.

9. Vorrichtung nach Anspruch 8, gekennzeichnet durch Einrichtungen zum Verhindern des Austretens von Masseteilchen aus der Feuchtigkeitskontrollzone in Form einer Belüftungspresse oder eines Vakuumdoms.

10. Vorrichtung nach Anspruch 8, gekennzeichnet durch eine Schraube mit Strombegrenzungseinrichtungen unmittelbar vor einer oder mehreren Entlüftungszonen, wie z.B. Rückförderelementen, Ventileinrichtungen oder anderen Hindernissen, welche den freien Materialfluß durch den Schraubenkanal beschränken.

11. Vorrichtung nach Anspruch 9, dadurch gekennzeichnet, daß die Belüftungspresse eine Doppelschraubenbelüftungspresse ist.

## Claims

1. A single stage process for producing an unexpanded, pre-cooked and formed product, having a moisture content suitable for final processing, from a starch containing raw material, characterized in that the raw material, such as cereal, potato or topioca flour, is introduced into a mixing zone in the feeding zone of the extruder,
water is fed into the mixing zone,
the raw material and the water are mixed in the mixing zone to form a mass,
the mass is then cooked in a pre-cooking zone at 100 to 150°C to produce a pre-cooked plasticized mass,
immediately afterwards the plasticized mass is moved into a vent zone, where a portion of the moisture is removed as steam to produce a pre-cooked mass having a desired moisture content,
the pre-cooked mass is then cooled in a last zone of the extruder preferably to 70 to 80°C and the cooled mass is then transported into a die section where it is formed.

2. The process of claim 1, characterized in that the moisture control zone is at a pressure less than atmospheric.

3. The process of claim 1, characterized by defined adjusting conditions in the moisture control zone to adjust the moisture content of the pre-cooled mass therein by controlling the pressure therein.

4. The process of claim 1, characterized in that the liquid is water, an aqueous solution containing a substance selected from the group consisting of NaCl, glucose, saccharose, lactose, maltose, a mono- and/or di-saccharide, or mixtures thereof.

5. The process of claim 4, characterized in that the liquid also contains emulsifiers and/or mono- or diglycerides.

6. The process of claim 1, characterized in that the moisture control zone is operated at atmospheric pressure.

7. The process of claim 1, characterized in that the moisture control zone is operated above atmospheric pressure.

8. An apparatus for producing, in a single stage, an unexpanded, pre-cooked and formed product having a moisture content suitable for final processing from a starch containing raw material, according to claim 1, characterized by a mixing zone adapted to receive the raw material and a liquid, wherein a plasticized mass is formed,
means for moving said plasticized mass from the mixing zone into a pre-cooking zone, wherein said mass is pre-cooked, means for moving said pre-cooked mass into a moisture control zone,
means for adjusting the moisture content of the pre-cooked mass in the moisture control zone, and
means to prevent the mass from venting from the moisture control zone.

9. The apparatus of claim 8, characterized by means for preventing the mass from venting from the moisture control zone in the form of a vent stuffer or a vacuum dome.

10. The apparatus of claim 8, characterized by a screw that has just before one or more vent zones, a restriction device such as reverse flight elements, barrel valve devices or other restrictions which can restrict the free material flow through the screw channel.

11. The apparatus of claim 9, characterized in that the vent stuffer is a twin-screw vent stuffer.

## Revendications

1. Procédé pour la fabrication en une étape d'un produit non expansé, précuit et formé comportant une teneur en humidité appropriée à un traitement final à partir d'une matière première contenant de l'amidon, caractérisé en ce que la matière première, telle que de la farine de céréale, de pomme de terre ou de tapioca, est amenée dans une zone de mélange située dans a partie d'alimentation de l'extrudeuse,
de l'eau est introduite dans la zone de mélange,
la matière première et l'eau sont mélangées dans la zone de mélange en créant une masse,
la masse est ensuite cuite à 100 à 150°C dans une zone de précuisson pour fabriquer une masse plastifiée précuite,
la masse plastifiée est immédiatement ensuite amenée dans la zone de désaération, où une partie de l'humidité est enlevée sous forme de vapeur pour fabriquer une masse précuite à teneur en humidité souhaitée, la masse précuite est ensuite refroidie de préférence à 70 à 80°C dans une dernière partie d'extrudeuse, et la masse refroidie est ensuite transportée dans une partie de formage et elle est formée.

2. Procédé selon la revendication 1, caractérisé en ce que la zone à humidité contrôlée se trouve sous une pression inférieure à la pression atmosphérique.

3. Procédé selon la revendication 1, caractérisé par des conditions définies de réglage dans la zone à humidité contrôlée pour régler au moyen d'une commande de pression la teneur en humidité de la masse prérefroidie.

4. Procédé selon la revendication 1, caractérisé en ce que le liquide est de l'eau, une solution aqueuse contenant une substance du groupe du chlorure de sodium, du glucose, du saccharose, du lactose, du maltose, du mono- et/ou du disaccharide ou des mélanges de ceux-ci.

5. Procédé selon la revendication 4, caractérisé en ce que le liquide contient des émulsionnants et/ou des mono- ou diglycérides.

7

6. Procédé selon la revendication 1, caractérisé en ce que la zone à humidité contrôlée fonctionne sous pression atmosphérique.

7. Procédé selon la revendication 1, caractérisé en ce que la zone à humidité contrôlée fonctionne à une pression supérieure à la pression atmosphérique.

8. Dispositif pour la fabrication en une étape d'un produit non expansé, précuit et formé comportant une teneur en humidité appropriée à un traitement final à partir d'une matière première contenant de l'amidon selon la revendication 1, caractérisé par une zone de mélange, destinée à recevoir la matière première et un liquide, dans laquelle est constituée une masse plastifiée,
des appareillages pour transporter la masse plastifiée de la zone de mélange dans une zone de précuisson où la masse est précuite, des appareillages pour transporter la masse précuite dans une zone de contrôle d'humidité,
des appareillages pour régler la teneur en humidité de la masse précuite dans la zone d'humidité contrôlée, des appareillages pour empêcher l'entraînement par soufflage de particules de la masse hors de la zone à humidité contrôlée.

9. Dispositif selon la revendication 8, caractérisé par des appareillages destinés à empêcher la sortie de particules de masse hors de la zone à humidité contrôlée sous forme d'une presse d'aération ou d'un dôme sous vide.

10. Dispositif selon la revendication 8, caractérisé par une vis comportant des appareillages de limitation de courant immédiatement avant une ou plusieurs zones de désaération, tels par exemple que des éléments de refoulement, des appareillages de valve, ou d'autres obstacles, qui limitent un écoulement libre de matière à travers le canal de vis.

11. Dispositif selon la revendication 9, caractérisé en ce que la presse d'aération est une presse d'aération à double vis.

FIG.1

EP 0 252 270 B1

FIG. 2